# EUROPÄISCHE PATENTSCHRIFT

(11) **EP 0 962 277 B1**
(45) Veröffentlichungstag und Bekanntmachung des Hinweises auf die Patenterteilung: **14.08.2002**
(21) Anmeldenummer: 99890167.2
(22) Anmeldetag: 25.05.1999
(51) Int. Cl.: B23K 10/02

(54) **Plasma-Schweissbrenner**
Plasma welding torch
Torche de soudage à plasma

(30) Priorität: 02.06.1998 AT 94198; 04.01.1999 AT 299 U
(43) Veröffentlichungstag der Anmeldung: 08.12.1999
(73) Patentinhaber: Inocon Technologie Gesellschaft m.b.H, 4800 Attnang-Puchheim (AT)
(72) Erfinder: Schwankhart, Gerhard Dipl.-Ing., 4800 Attnang-Puchheim (AT)
(74) Vertreter: Kliment, Peter

(56) Entgegenhaltungen:
- CH-A- 605 011
- PATENT ABSTRACTS OF JAPAN vol. 015, no. 006 (M-1066), 8. Januar 1991 (1991-01-08) & JP 02 258177 A (NISSAN MOTOR CO LTD;OTHERS: 01), 18. Oktober 1990 (1990-10-18)

## Beschreibung

Die Erfindung bezieht sich auf einen Plasma-Schweißbrenner gemäß dem Oberbegriff des Anspruches 1.

Ein Plasma-Brenner mit den Merkmalen des Oberbegriffes des Anspruchs 1 ist aus der US-A-3 900 762 bekannt. Ein Plasma-Schweißbrennes ist aus der CH-A-605 011 bekannt.

Bei bekannten Schweißbrennern weist der Auscrittskanal, der sich im Bereich des verjügenden Abschnittes der Elektrode erstreckt, einen an die Kammer unmittelbar anschließenden zylindrischen Bereich auf, an den sich ein bis zur Mündung erstreckender sich verjüngender Abschnitt anschließt. Dabei weist jedoch die Innenwand des sich verjüngenden Abschnittes des Austrittskanals einen Kegelwinkel auf der erheblich größer als jener des kegeligen Endes der Elektrode ist.

Bei solchen bekannten Schweißbrennern wird trotz der Bündelung, des Plasmastahles durch die Geometrie des Austrittskanals und der Elektrode eine sehr erhebliche Aufweitung des Plasmastrahles und daher ein relativ großer Brennfleck auf dem zu bearbeicenden Werkstück beobachtet. Dies führt zu einer meist unerwünschten Vergrößerung der von der Wärme beaufschlagten Zone des Werkstückes und häufig zu einem Verzug desselben, insbesondere wenn relativ dünne Blechteile bearbeitet werden.

Der große Brennfleck bedingt aber auch eine hohe thermische Be-lastung des Plasmabrenners, der aufgrund der hohen Temperaturen entsprechend gut gekühlt werden muß. Da dies bereits bei relativ kleinen Leistungen des Schweißbrenners praktisch nur mit in Kühlkanälen strömendem Wasser zu bewerkstelligen ist, ergeben sich entsprechend klobige Konstruktionen für den Plasma-Schweißbrenner. Damit ergibt sich jedoch der Nachteil, daß mit solchen Brennern an komplizierter geformten Werkstücken, insbesonder nicht an Stellen an denen T-Nähte herzustellen sind gearbeitet werden kann und bereits bei der Konstruktion auf die Schweißung mit solchen Plasmabrennern Rücksicht genommen werden muß.

Aufgrund des sich ausbildenden großen Brennflecks ist es auch erforderlich mit den herkömmlichen Plasma-Schweißbrennern in einem nur geringen Abstand von den Werkstücken zu arbeiten, wodurch aber die Belastung des Brenners steigt und dieser einem hohen Verschleiß ausgesetzt ist.

Ein weiterer Nachteil der bekannten Schweißbrenner liegt auch darin, daß eben aufgrund der sehr hohen thermischen Belastung des Schweißbrenners keine hohen Leistungen möglich sind und die Schweißbrenner mit nicht mehr als ca. 100A betrieben werden können. Bei größeren Stromstärken beginnt der Plasmabogen zwischen der Elektrode und der Wand der Kammer des Austrittskanals des Schweißbrenners und von dessen freier Stirnseite im Bereich der Mündung des Austrittskanals zum Werkstück zu brennen, was zu einer praktisch sofortigen Zerstörung des Plasmabrenners führt.

Auch kann mit den bekannten Plasma-Schweißbrennern nur mit relativ geringen Schweißgeschwindigkeiten von max. 25mm/sec oder 30mm/sec gearbeitet werden, da sich sonst der Plasmabogen zu stark verbiegt und zu springen beginnt oder überhaupt zerfällt.

Ziel der Erfindung ist es, diesen Nachteil zu vermeiden und einen Plasma-Schweißbrenner der eingangs erwähnten Art vorzuschlagen, der sich auch für höhere Leistungen eignet und sich durch eine hohe Standzeit auszeichnet.

Erfindungsgemäß wird dies bei einem Brenner der eingangs erwähnten Art durch die kennzeichnenden Merkmale des Anspruches 1 erreicht.

Durch die vorgeschlagenen Merkmale wird erreicht, daß das aus dem Austrittskanal ausströmende Plasmagas den Plasmastrahl außerhalb des Austrittskanals des Brenners zusammenhält, bzw. einschnürt. Dies ist durch den Umstand bedingt, daß das Plasmagas im wesentlichen entlang eines eine bestimmte Wandstärke aufweisenden Kegelmantels ausströmt und daher Verwirbelungen weitgehend vermieden werden. Dadurch ergibt sich ein entsprechend kleiner Brennfleck auf dem Werkstück und eine Konzentration der Energie auf einen nur sehr kleinen Bereich. Dies ermöglicht es auch den Plasmabrenner in einem größeren Abstand vom Werkstück zu führen und aufgrund der höheren Energiedichte auf dem Werkstück auch mit einer größeren Vorschubgeschwindigkeit zu arbeiten. Außerdem ergibt sich auch ein wesentliche geringerer Verschleiß des Brenners und es ist auch möglich mit einer höheren Strombelastung, z.B. mit 1000A zu arbeiten.

Außerdem kann auch in vielen Fällen, z.B. wenn im Impulsbetrieb gearbeitet wird, wie dies z.B. bei Überkopf-Schweißungen oder bei manchen Stahlsorten erforderlich ist, auf eine bei herkömmlichen Schweißbrennern auch in solchen Fällen unbedingt erforderliche Wasserkühlung des Schweißbrenners verzichtet werden und mit der Kühlung durch das in die Kammer einströmende Plasmagas des Auslange gefunden werden.

Aber auch bei einem Betrieb des erfindungsgemäßen Schweißbrenners mit Flow - Plasma, d.h. mit kontinuierlich strömendem Plasma, ist die thermische Belastung, verglichen mit jener herkömmlicher Schweißbrenner, wesentlich geringer, sodaß auch der Aufwand für die Wasserkühlung drastisch reduziert und daher auch die Schweißbrenner selbst wesentlich kleiner gebaut werden können. Dadurch kann mit den erfindungsgemäßen Schweißbrennern auch an Stellen gearbeitet werden, die für die herkömmlichen Plasma-Schweißbrenner, aufgrund deren durch die Kühlung bedingten Größe unzugänglich waren.

Das aus der Mündung des Austrittskanals ausströmende Plasmagas sorgt aufgrund der vorzugsweise 15° bis 25 ° kegeligen Gestalt des Gasmantels auch trotz der Abbremsung an seiner Außenseite durch die umgebende Luft für eine sehr gute Einschnürung des Plasmas und damit für eine nur sehr geringe Größe des auf den Werkstücken erzeugten Brennflecks. Damit wird die Gefahr eines Verzugs wesentlich herabgesetzt.

Durch die Vermeidung einer Aufweitung des Plasmastrahls, wie sie bei den bisherigen Schweißbrennern aufgetreten ist und den Umstand, daß der Plasmastrahl den Schweißbrenner nicht berührt, kann auch mit wesentlich höheren Schweißgeschwindigkeiten von 300mm/sec und mehr gearbeitet werden, ohne, daß es zu einem Springen des Plasmas am Werkstück kommt. Dabei kann auch eine stechende Arbeitslage des erfindungsgemäßen Schweißbrenners vorgesehen sein.

Außerdem ist bei den erfindungsgemäßen Schweißbrennern der Abstand zwischen der Mündung des Austrittskanals und den Werkstücken, der bei den bekannten Brennern sehr genau auf meist 2,5mm bis 3mm eingestellt werden mußte, unkritisch und kann auch zwischen z.B. 2mm und 6mm schwanken. Dadurch kann auch der Aufwand beim Zurichten und Einrichten der zu schweißenden Werkstücke wesentlich vermindert werden.

Bei der Stromquelle für den Betrieb des erfindungsgemäßen Schweißbrenners kann es sich um eine Gleichstromguelle handeln.

Der erfindungsgemäße Plasma-Schweißbrenner hat den weiteren Vorteil, dass durch den Kathodenwinkel von 15° bis 25° Verwirbelungen verhindert werden, welche dazu führen würden, dass die Kathode mit Sauerstoff in Berührung kommt. Die Ausbildung einer laminaren Strömung ist im vorliegenden Fall von großer Bedeutung.

Besonders günstige Verhältnisse ergeben sich durch die Merkmale des Anspruches 3.

Durch diese Maßnahmen ergibt sich bei Anwendungen, bei denen das zu bearbeitende Werkstück an einen Pol einer Stromquelle angeschlossen ist, überdies ein sehr stabiler Fußpunkt des Lichtbogens an der Elektrode und es kann von diesem die Wärme gut abgeführt werden. Dadurch ergibt sich ein nur geringer Verschleiß der Elektrode.

Bei einem bekannten Plasmabrenner ist dessen Elektrode in einer Kammer für ein Plasmagas, z.B. Argon, Helium, Wasserstoff u.s.w. gehalten, bzw. durchsetzt diese, wobei diese Kammer mit einem Einlaßkanal und einem Austrittskanal versehen ist, der an einer Stirnseite des Plasmabrenners eine Mündung aufweist und der Übergang von der Kammer zum Austrittskanal im Bereich des minimalen Abstandes zwischen Elektrode und einem diese umgebende Wand im Mündungsbereich des Plasmabrenners liegt. Dabei ist der Austrittskanal abschnittweise von weiteren Kanälen mit gegenüber jenem des Austrittskanals kleinerem Querschnitt umgeben, die an der die Mündung des Austrittskanals aufweisenden Stirnseite des Plasmabrenners offen sind und mit der Kammer in Verbindung stehen. Im bekannten Falle sind lediglich zwei zusätzliche Kanäle vorgesehen, deren Achsen parallel zueinander und zur Achse des Austrittskanals verlaufen.

Mit diesem bekannten Brenner läßt sich zwar Plasmagas in den Bereich des Brennflecks leiten, doch ergibt sich dabei nur eine eher bescheidene Abschirmung gegen den Zutritt von Sauerstoff, Außerdem tragen die zusätzlichen Kanäle praktisch nichts zu einer besseren Einschnürung des Plasmas bei, sodaß die bereits erwähnten damit verbundenen Probleme weitgehend erhalten bleiben.

Um einen sehr weitgehenden Schutz des im Bereich des Brennflecks erhitzten Werkstücks gegen den Zutritt von Luft zu erreichen, werden die zusätzlicher Merkmale des Anspruches 4 vorgeschlagen.

Dadurch ist überdies sichergestellt, daß mit sehr erheblicher Geschwindigkeit über die weiteren Kanäle austretendes Plasmagas die unmittelbare Umgebung des Brennflecks kühlt und daher eine höhere thermische Belastung des Werkstückes und dadurch auch ein Verzug desselben, insbesondere auch dann, wenn es sich um Werkstücke aus dünnen Blechen handelt, vermieden wird. Außerdem wird durch die vorgeschlagenen Maßnahmen auch die Einschnürung des Plasmas verbessert, wodurch der Brennfleck besonders klein gehalten werden kann, was die Energiedichte am Werkstück erhöht und die Einsparung von Energie ermöglicht. Außerdem kann aufgrund der hohen Energiedichte auch mit entsprechend hohen Vorschubgeschwindigkeiten gearbeitet werden. Dabei ist trotzdem eine relativ große Tiefe der Schweißnaht möglich.

Die Erfindung wird nun anhand der Zeichnung näher erläutert. Dabei zeigen:
Fig. 1 einen Schnitt durch einen erfindungsgemäßen Plasma-Schweißbrenner,
Fig. 2 einen Schnitt durch die Kühlmittelkammer,
Fig. 3 einen Schnitt durch die Zentrierhülse, und
Fig. 4 schematisch einen erfindungsgemäßen Plasma-Schneidbrenner mit einem Werkstück.

Beim Plasma-Schweißbrenner 11' ist ein Halteteil 18' einer Elektrode 19' durch eine Spannzange gebildet, die aus einem elektrisch gut leitenden Material hergestellt ist. Diese Spannzange ist in üblicher Weise in einem Aufnehmer 44 gehalten, der in einen Kontaktteil 45 eingeschraubt ist.

Dieser Kontaktteil 45 ist mit einer Kühlmittelkammer 46 versehen, die über einen radialen Kanal 47 mit einer Anschlußöffnung 48 verbunden ist. Dabei fluchtet diese Anschlußöffnung 48 bei in einem nicht dargestellten Halter montiertem Plasma-Schweißbrenner 11' mit Kontaktstiften.

Zum Spannen und Lösen der Spannzange 18' ist eine Spannmutter 49 vorgesehen, die über eine Dichtung 50 an der oberen Stirnfläche der Aufnahme 44 abgestützt ist, wodurch ein Austritt von Kühlflüssigkeit vermieden wird, wobei die Aufnahme 44 zur Abdichtung der Kühlmittelkammer 46 ebenfalls über eine Dichtung 51 an dem Kontaktteil 45 abgestützt ist.

Zur weiteren Abdichtung der Kühlmittelkammer des Kontaktteiles 45 ist ein O-Ring 52 vorgesehen, der in einer Nut einer Bohrung 53 eingesetzt ist, die von der Aufnahme 44 durchsetzt ist.

Zur Sicherung der axialen Einstellung der Elektrode 19' beim Spannen der Spannzange 18' ist die Spannmutter 49 mit einer durchgehenden Gewindebohrung 90 versehen, in ein Anschlag 91 eingeschraubt ist, der in die Spannzange 18' eingreift. Dieser Anschlag 91 weist einen glatten Kopf 94 auf, in dem eine umlaufende Nut zur Aufnahme eines O-Ringes 95 eingearbeitet ist, der zur Abdichtung des Inneren der Spannzange 18' dient.

Zur Sicherung der Lage des Anschlages 91, der mittels eines in den stirnseitigen Schlitz 93 eingesetzten Schraubendrehers einstellbar ist, ist eine Kontramutter 92 vorgesehen, die gleichzeitig für eine drehfeste Verbindung zwischen dem Anschlag 91, an dem die Elektrode 19' anliegt, und der Spannmutter 49 sorgt.

Durch den Anschlag 91 ist sichergestellt, daß beim Spannen der Spannzange die Elektrode 19' von der Spannzange nicht mehr gegenüber einem für verschiedene Anwendungen als Anode verwendbaren Mündungsteil 15' axial bewegt werden kann, da die Spannmutter 49 an der Stirnfläche des Kontaktteiles 45 anliegt und der Mündungsteil 15' gegenüber dieser festgelegt ist.

Der Kontaktteil 45, der zur Kontaktierung der Elektrode 19' dient, ist unter Zwischenlage einer Dichtung 54 in einem Zwischenteil 55 eingesetzt und liegt auf diesem auf. Dabei ist der Zwischenteil 55 aus einem elektrisch isolierenden Material, wie z.B. Keramik, hergestellt. Dieser ringförmige Zwischenteil 55 bestimmt eine Kammer 27' die über einen radialen Kanal 56 mit einer Anschlußöffnung 57 verbunden ist.

Dabei ist der radiale Kanal 56 und ein weiterer radialer Kanal 47 mit umlaufenden Nuten 58 versehen, in denen O-Ringe 59 angeordnet sind. Diese dienen zur Abdichtung des in diese Kanäle eingreifenden nicht dargestellten Kontaktstiftes, der hohl ausgebildet und gleichzeitig zur Zufuhr von Kühlwasser dient, bzw. einer Gaszuführleitung zur Zufuhr eines Plasmagases, z.B. Argon, Helium, Wasserstoff usw..

In der Kammer 27' ist ein Verteilring 159 angeordnet, der mit über den Umfang verteilt angeordnete Bohrungen 60 versehen ist, deren Durchmesser sich in beiden Drehrichtungen mit größer werdendem Winkel zu dem radialen Kanal 56 vergrößert. Dabei bildet eine axiale Bohrung des Verteilringes 159 eine Kammer 96, die von der Elektrode 19' durchsetzt ist. Dabei verbleibt zwischen der Innenwand des Zwischenteiles 55 und dem Verteilring 159 ein Ringraum 61, in den über die Anschlußöffnung 57 und den radialen Kanal 56 Gas einbringbar ist.

Der Zwischenteil 55 ist über eine Dichtung 62 auf einem weiteren Kontaktteil 63 abgestützt, der zur Kontaktierung des Mündungsteiles 15' dient, wenn dieser als Anode verwendet wird, z.B. wenn der Plasmabrenner zum Oberflächenhärten verwendet wird. In diesen weiteren Kontaktteil 63 ist eine Spannhülse 64 in ein Innengewinde 65 eingeschraubt, wobei eine Dichtung 66 zwischen dem Kontaktteil 63 und der Stirnfläche der Spannhülse 64 zwischengelegt ist.

Die Spannhülse 64 weist im Bereich ihres einen Endes eine konische Anlagefläche 67 auf, an der eine gegengleiche kegelige Mantelfläche 68 eines Kopfes 69 des Mündungsteiles 15' anliegt, der ebenso wie die Spannhülse 64 und der weitere Kontaktteil 63 aus einem elektrisch gut leitenden Material hergestellt ist.

Der Mündungsteil 15' weist an seinem vom Kopf 69 abgekehrten Ende einen weiteren Kopf 70 auf, der unter Zwischenlage einer Dichtung 71 an einer Schulter des weiteren Kontaktteiles 63 anliegt. Dabei durchsetzt der Mündungsteil 15' eine Kühlmittelkammer 46 des weiteren Kontaktteiles 63.

Der Mündungsteil 15' ist in axialer Richtung durchbohrt, wobei in diese Bohrung 72 eine Hülse 73 aus einem elektrisch isolierenden Material, z.B. Keramik, eingesetzt und von der Elektrode 19' durchsetzt ist. Dabei verbleibt zwischen der Innenwand der Hülse 73 und der Elektrode 19' ein Ringraum der Teil der Kammer 96 ist und vom eingeleiteten Plasmagas, z.B. Argon, Helium, Wasserstoff usw. durchstrombar ist.

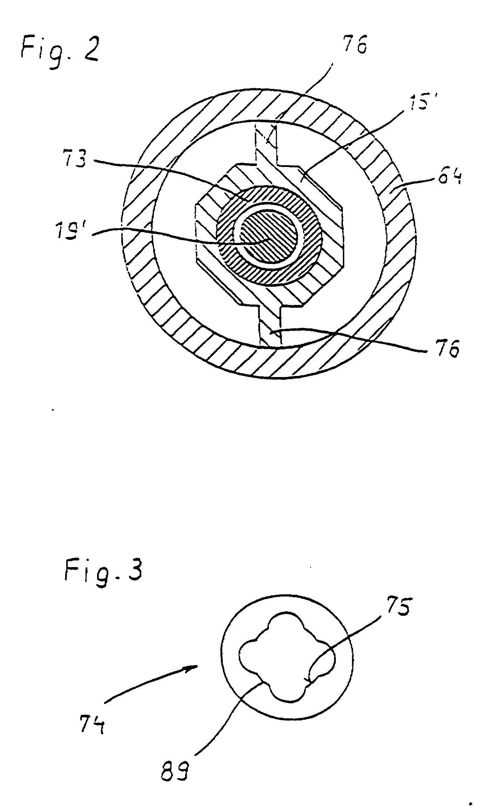

Weiters ist in der Bohrung 72 im der Mündung des Mündungsteiles 15' nahen Bereich eine Zentrierhulse 74 eingesetzt, die in der Fig. 3 näher dargestellt ist und deren an Führungsrippen 89 vorgesehenen Fuhrungsflächen 75 an der Mantelfläche der Elektrode 19' anliegen.

Der Mündungsteil 15' weist, wie aus der Fig. 2 zu ersehen ist radial abstehende Leitrippen 76 auf, die sich, wie aus der Fig. 2 zu ersehen ist, von dem einen sechseckigen Querschnitt aufweisenden Mündungsteil 15' bis zur Innenwand der Spannhülse 64 erstrecken und senkrecht zur Achse des radialen Kanals 47 stehen. Dabei erstrecken sich die Leitrippen 76 vom Kopf 70 weg gegen den Kopf 69 des Mündungsteiles 15' zu, wobei die Leitrippen 76 jedoch vor dem Kopf 69 enden und daher ein nicht dargestellter Strömungsweg zwischen dem Kopf 69 und den Enden der Leitrippen 76 verbleibt.

Dadurch wird die Kühlmittelkammer 46, die einerseits vom weiteren Kontaktteil 63 und der Spannhülse 64 begrenzt wird, durch die Leitrippen 76 unterteilt.

Die beiden Kühlmittelkammern 46 des Kontaktteiles 45 und des weiteren Kontaktteiles 63 sind über einen Überströmkanal 70 miteinander verbunden.

Dieser Überströmkanal 78 setzt sich im wesentlichen aus axialen Bohrungen 79 in dem Kontaktteil 45, bzw. dem weiteren Kontaktteil 63 und radialen, zu den radialen Kanälen 47 koaxialen Bohrungen 80 zusammen, die in die axialen Bohrungen 79 münden. Dabei ist der Zwischenteil 55 mit einer mit den axialen Bohrungen 79 fluchtenden Bohrung 81 versehen.

Dabei sind im Bereich der Bohrung 81 des Zwischenteiles 55 Dichtungen 82 vorgesehen.

Die beiden Kontaktteile 45 und 63 sind von Ringen 84 aus einem elektrisch isolierten Material umgeben, bzw. diese sitzen auf Krägen 85 auf.

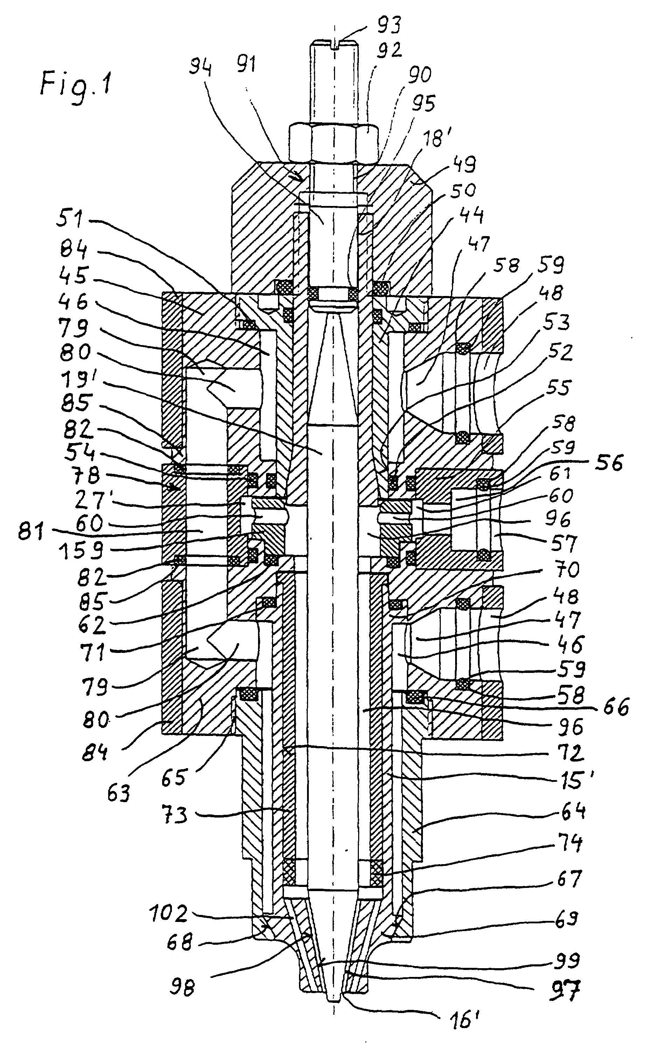

Wie aus der Fig. 1 ersichtlich verlauft im Mündungsbereich 98 des Mündungsteiles 15' die Innenwand 99 im wesentlichen parallel zum kegeligen Endbereich der Elektrode 19'. Durch ergibt sich in diesem Bereich eine kegelige Gestalt des Austrittskahals 97.

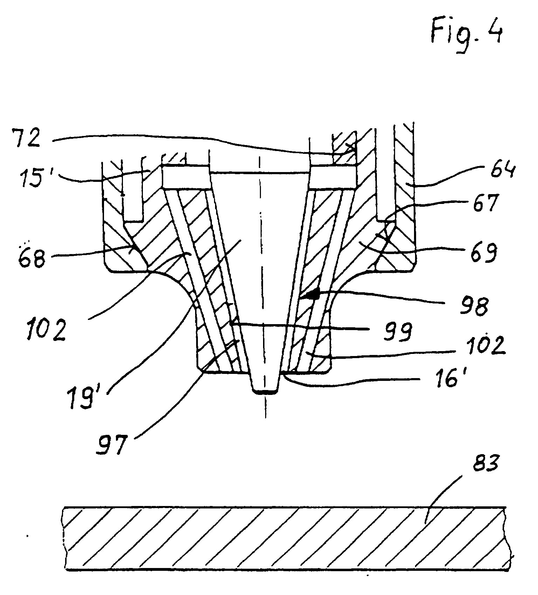

Weiters ergibt sich, daß die Spitze der Elektrode 19', die wie insbesondere aus der Fig. 4 zu ersehen ist, an ihren freien Ende abgeflacht ist, aus der freien Stirnseite des Mundungsteiles 15' vorragt.

Die Elektrode 19' ist an ihren beiden Enden kegelig ausgebildet und kann im Bedarfsfall nach ihrer Demontage gewendet und wieder eingesetzt werden. Erst wenn die Elektrode 19' an ihren beiden Enden abgenutzt ist, ist eine Nachbearbeitung der Elektrode 19' erforderlich, um sie wieder verwenden zu können.

Der Mündungsteil 15' weist im Bereich seines Kopfes 69 noch weitere Kanäle 102 auf, die den kegelmantelförmigen Austrittskanal 97 konzentrisch umgeben und deren Achsen Erzeugende eines Kegelmantels bilden, dessen Achse konzentrisch zur Achse des Austrittskanals 97 verläuft. Der Kegelwinkel der Achsen der weiteren Kanäle 102 ist größer als der Kegelwinkel des Austrittskanals 97, sodaß sich ein gemeinsamer Schnittpunkt der Achsen der weiteren Kanäle mit den Erzeugenden des kegelmantelförmigen Austrittskanals 97 ergibt. Dieser Schnittpunkt liegt vorzugsweise 6mm bis 8mm vor der freien Stirnseite des Mündungsteiles 15'.

Die zusätzlichen Kanäle 102 reichen von der Kammer 96 bis zur freien Stirnseite des Mündungsteiles 15' wo sie offen sind und führen daher im Betrieb kaltes Plasmagas, das so auch zur Kühlung des Mündungsbereiches des Mündungsteiles 15' beitragt. Dies ist insbesondere von Bedeutung, wenn der Mündungsteil 15' als Anode geschaltet ist und zwischen der als Kathode geschalteten Elektrode 19' im Bereich des Austrittskanals 97 ein Lichtbogen brennt und daher aus der Mündung 16' Plasma austritt.

Die beiden Kontaktteile 45 und 63 und der Zwischenteil 55 sind mittels nicht dargestellter Schrauben miteinander verbunden und stellen Verbindungsteile dar, durch die ein modularer Aufbau des Plasma-Schweißbrenners 11' sichergestellt ist. Dabei umfaßt dieser Modul nicht bloß den als Elektrode schaltbaren Mündungsteil 15' sondern auch die nicht verzehrende Elektrode 19' samt deren Halteteil 18', wodurch der gesamte Plasmaerzeuger als ein Bauteil ausgetauscht werden kann.

Beim Betrieb wird Gas, z.B. Helium, Argon, Wasserstoff od. dgl. in die Kammer 27', bzw. 96 eingeblasen und ein Lichtbogen zwischen der Elektrode 19' und dem Werkstück 83, das ebenso wie die Elektrode 19' an eine nicht dargestellte Gleichstromquelle angeschossen ist, gezundet. In Verbindung mit dem aus einer am Ende des Austrittskanals 97 vorgesehenen Düsenoffnung 15' bildet sich zwischen der Spitze der Elektrode 19', die wie aus der Fig. 4 zu ersehen ist, abgeflacht ist, und dem Werkstück ein Plasmastrahl aus, mit dem zwei Werkstücke verschweißt werden konnen.

Da das Plasmagas aus dem Austrittskanal 97 in Form eines Kegelmantels austritt wirkt dieser kegelmantelförmige Gasstrahl einschnürend auf das Plasma und führt dieses. Dadurch entsteht auf dem zu bearbeitenden Werkstück 83 nur ein kleiner Brennfleck. Dies bedingt, daß die thermische Belastung der unmittelbaren Umgebung der herzustellenden Schweißnaht gering bleibt.

Dabei verhindert das über die weiteren Kanäle 102 mit hoher Geschwindigkeit austretende Plasmagas eine Aufweitung des aus der Mündung 16' austretenden Plasmastrahles aufgrund der Reibung an der umgebenden, im wesentlichen stillstehenden Luft. Außerdem wirkt sowohl die Geometrie des kegelmantelförmigen Austrittskanals 97, wie auch das aus den weiteren Kanälen 102 austretende kalte Plasmagas, das ebenfalls angenähert in Form eines Kegelmantels austritt, einschnürend auf den austretenden PlasmaStrahl ein. Dadurch ergibt sich auf einem zu bearbeitenden Werkstück eine sehe hohe Energiedichte. Dies bewirkt, daß mit relativ geringem Energieinsatz eine hohe Arbeitsgeschwindigkeit erreicht werden kann und die thermische Beanspruchung des Werkstückes auf einen nur sehr kleinen Bereich beschränkt ist. Dies ist insbesondere bei der Bearbeitung von dünnwandigen Werkstucken oder Blechen im Hinblick auf die Vermeidung von Verzugserscheinungen von Bedeutung.

Da bei der in Fig. 4 dargestellten Anwendung der Lichtbogen, bzw. das Plasma nur zwischen der abgeflachten und aus der Ebene der Stirnseite des Mündungsteiles 15' herausragenden Spitze der Elektrode 19', die bei den meisten Schweißanwendungen als Kathode geschaltet ist, brennt, komme es zu keiner direkten Belastung des Mündungsteiles 15' durch das Plasma, so daß sich eine, verglichen mit den herkömmlichen Plasma-Schweißbrennern, bei denen der Mündungsteil auch zur Führung des Plasmas dient, zu einer erheblich geringeren thermischen Belastung dieses Teiles.

Außerdem kann der Abstand zwischen der freien Stirnseite des Mündungsteiles 15' und dem Werkstück 33 in weiten Grenzen schwanken und erheblich größer gewählt werden, als dies bei den bisherigen Plasma-Schweißbrennern möglich war und kann z.B. 2mm bis 6mm betragen.

## Patentansprüche

1. Plasma-Schweißbrenner mit einer Kammer (96), in der eine sich nicht verzehrende, an eine Gleichstromquelle angeschlossene Elektrode (19') angeordnet ist, wobei die Kammer (96) die mit einem Austrittskanal (97) und einem Einlaßkanal (56) für ein Plasmagas, z.B. Argon, Helium, Wasserstoff usw., versehenen ist, und die Elektrode (19') einen freien Endbereich aufweist, der zumindest bis zum äußeren Ende des Austrittskanals (97) reicht und sich gegen das freie Ende zu verjüngt und sich der Austrittskanal (97) bis zur Mündung an einer Stirnseite des Schweißbrenners ebenfalls verjüngt, wobei die Innenwand (99) des Austrittskanals (97) im wesentlichen parallel zum sich verjüngenden Abschnitt der Elektrode (19') verläuft und wobei der Austrittskanal (97) zumindest Abschnittsweise von weiteren zur Führung von kaltem Plasmagas vorgesehenen Kanälen (102) umgeben ist, **dadurch gekennzeichnet, daß** die weiteren Kanäle (102) aren kleinerer Querschnitt als der Austrittskanal (97) aufweisen und an der die Mündung des Austrittskanals (102) aufweisenden Stirnseite des Plasmabrenners (11') offen sind und mit der Kammer (96) in Verbindung stehen und die Spitzen der von den Achsen der weiterer Kanäle (102) bestimmten Kegelmantelfläche und der Kegelmantelfläche des Austrittskanals (97) in einem Abstand von 3 bis 8mm vor der Mündung des Austrittskanals (97) liegen und im wesentlichen den gleichen Abstand von der Mündung des Austrittskanals (97) aufweisen.

2. Plasma-Schweißbrenner nach Anspruch 1, **dadurch gekennzeichnet, daß** die Elektrode (19') in ihrem freien Endbereich einen Kegelwinkel von 15° bis 25° aufweist.

3. Plasma-Schweißbrenner nach Anspruch 1 oder 2, **dadurch gekennzeichnet, daß** das Ende der Elektrode (19') abgeflacht ist und eine im wesentlichen senkrecht zu deren Längsrichtung verlaufende freie Stirnseite aufweist, wobei der Durchmesser der Abflachung 15% bis 35% des größten Durchmessers der Elektrode (19') beträgt.

4. Plasma-Schweißbrenner nach einem der Ansprüche 1 bis 3, **dadurch gekennzeichnet, daß** zumindest drei, vorzugsweise sieben, von den Austrittskanal (97) umgebenden Kanäle (102) entlang einer den Austrittskanal (97) konzentrisch umgebenden Umfangslinie gleichmäßig verteilt angeordnet sind und die Achsen der weiteren zur Führung von kaltem, Plasmagas vorgesehenen Kanäle (102) Erzeugende einer Kegelmantelfläche sind, deren Achse koaxial zur Achse des Austrittskanals (101) verläuft, wobei die weiteren Kanäle (102) bis in die Kammer (96) reichen.

5. Plasma-Schweißbrenner nach einem der Ansprüche 1 bis 45, **dadurch gekennzeichnet, daß** die Rauhtiefe des kegeligen Endbereichs der Elektrode (19'), des kegeligen Bereichs des Austrittskanals (97) und der diesen umgebenden weiteren Kanäle (102) einen Wert von 1µm nicht übersteigt.

6. Plasma-Schweißbrenner nach einem der Ansprüche 1 bis 5, **dadurch gekennzeichnet, daß** der Übergang von der Kammer (96) zum Austrittskanal (97) durch eine umlaufende Kante gebildet ist, an der die Erzeugenden der Innenwand oder des Bodens der Kammer (96) mit jenen der Innenwand des Austrittskanals (97) einen erhabenen Winkel einschließen und die gegebenenfalls als Fußbereich eines zur Erzeugung von Plasma dienenden Lichtbogens dient.

## Claims

1. A plasma welding torch with a chamber (96) in which a non-consumable electrode (19') connected to a DC source is arranged, with the chamber (96), which is provided with an outlet port (97) and an inlet port (56) for a plasma gas such as argon, helium, hydrogen, etc., and the electrode (19') having a free end section which reaches at least up to the outer end of the outlet port (97) and tapers towards the free end, and the outlet port (97) also tapers up to the orifice on a face side of the welding torch, with the interior wall (99) of the outlet port (97) extending substantially parallel to the tapering section of the electrode (19') and with the outlet port (97) being enclosed at least in sections by further ports (102) provided for guiding cold plasma gas, **characterized in that** the further ports (102) have a smaller cross section as compared with that of the outlet port (97) and are open on the face side of the plasma torch (11') comprising the orifice of the outlet port (102) and are in connection with the chamber (96) and the tips of the envelope of the cone as determined by the axes of the further ports (102) and of the envelope of the cone of the outlet port (97) are disposed at a distance of 3 to 8 mm before the orifice of the outlet port (97) and are substantially provided with the same distance from the orifice of the outlet port (97).

2. A plasma welding torch as claimed in claim 1, **characterized in that** the electrode (19') is provided in its free end zone with a cone angle of 15° to 25°.

3. A plasma welding torch as claimed in claim 1 or 2, **characterized in that** the end of the electrode (19') is flattened off and is provided with a free face side extending substantially perpendicular to its longitudinal direction, with the diameter of the flattening being 15% to 35% of the largest diameter of the electrode (19').

4. A plasma welding torch as claimed in one of the claims 1 to 3, **characterized in that** at least three, but preferably seven, ports (102) encompassing the outlet port (97) are arranged in an evenly distributed manner along a circumferential line concentrically encompassing the outlet port (97) and the axes of the further ports (102) which are provided for guiding cold plasma gas are the generatrix of an envelope of a cone whose axis extends coaxially to the axis of the outlet port (101), with the further ports (102) reaching up into the chamber (96).

5. A plasma welding torch as claimed in one of the claims 1 to 4, **characterized in that** peak-to-valley height of the conical end zone of the electrode (19'), of the conical zone of the outlet port (97) and the further ports (102) encompassing the same do not exceed a value of 1 µm.

6. A plasma welding torch as claimed in one of the claims 1 to 5, **characterized in that** the transition from the chamber (96) to the outlet port (97) is formed by a circular edge on which the generatrices of the interior wall or the floor of the chamber (96) enclose a reflex angle with those of the interior wall of the outlet port (97) and which optionally is used as a root zone of an arc used to produce plasma.

## Revendications

1. Torche de soudage à plasma avec une chambre (96) dans laquelle se trouve une électrode (19') qui ne se consume pas et qui est branchée sur une source de courant continu, la chambre (96) comportant un canal de sortie (97) et un canal d'admission (56) pour un gaz plasmagène, par exemple de l'argon, de l'hélium, de l'hydrogène, etc. et l'électrode (19') présente une partie terminale libre qui s'étend au moins jusqu'à l'extrémité externe du canal de sortie (97) et s'effile vers l'extrémité libre et le canal de sortie (97) s'effile lui aussi jusqu'à son orifice sur une face de la torche de soudage, la paroi intérieure (99) du canal de sortie (97) étant sensiblement parallèle au segment effilé de l'électrode (19') et le canal de sortie (97) étant entouré au moins partiellement par des sections d'autres canaux (102) permettant de guider le gaz plasmagène froid, **caractérisée en ce que** les autres canaux (102) présentent une section transversale plus petite que celle du canal de sortie (97), ils sont ouverts sur la face de la torche de soudage (11') comportant l'orifice du canal de sortie (102), ils sont reliés à la chambre (96), et les extrémités respectivement de la surface latérale de cône déterminée par les axes des autres canaux (102) et de la surface latérale de cône du canal de sortie (97) sont situées de 3 à 8 mm avant l'orifice du canal de sortie (97) et présentent sensiblement le même écart par rapport à l'orifice du canal de sortie (97).

2. Torche de soudage à plasma selon la revendication 1, **caractérisée en ce que** l'électrode (19') présente dans sa partie terminale libre un angle de cône de 15° à 25°.

3. Torche de soudage à plasma selon la revendication 1 ou 2, **caractérisée en ce que** l'extrémité de l'électrode (19') est aplatie et présente une face libre s'étendant de façon sensiblement perpendiculaire à sa direction longitudinale, le diamètre de l'aplatissement représentant 15 à 35 % du plus grand diamètre de l'électrode (19').

4. Torche de soudage à plasma selon l'une des revendications 1 à 3, **caractérisée en ce qu'**au moins trois, de préférence sept, des canaux (102) entourant le canal de sortie (97) sont répartis à intervalles réguliers le long d'une ligne circonférentielle entourant de façon concentrique le canal de sortie (97) et les axes des autres canaux (102), permettant de guider le gaz plasmagène froid, génèrent une surface latérale de cône, dont l'axe s'étend de façon coaxiale par rapport à celui du canal de sortie (101), les autres canaux (102) allant jusqu'à la chambre (96).

5. Torche de soudage à plasma selon l'une des revendications 1 à 4, **caractérisée en ce que** la profondeur d'aspérité de la partie terminale conique de l'électrode (19'), de la zone conique du canal de sortie (97) et des autres canaux (102) entourant ce dernier, ne dépasse pas une valeur de 1 µm.

6. Torche de soudage à plasma selon l'une des revendications 1 à 5, **caractérisée en ce que** le passage de la chambre (96) au canal de sortie (97) est formé par une arête rotative, sur laquelle les génératrices de la paroi intérieure ou du fond de la chambre (96) forment un angle concave avec ceux de la paroi intérieure du canal de sortie (97) et l'arête sert, le cas échéant, comme base d'un arc électrique permettant de produire le plasma.
